# EUROPEAN PATENT APPLICATION

(11) **EP 4 755 820 A1**
(43) Date of publication of application: **10.06.2026**
(21) Application number: 24847806.7
(22) Date of filing: 13.06.2024
(51) Int. Cl.: B65D 90/02, H01M 8/18, E04H 7/18

(54) **ELECTROLYTE STORAGE TANK**

(30) Priority: 02.08.2023 CN 202310969212
(71) Applicant: VRB Energy Inc., Grand Cayman (KY)
(72) Inventor: DONG, Shuai, Beijing 101100 (CN); GE, Qiming, Beijing 101100 (CN); LIU, Huichao, Beijing 101100 (CN); ZHAO, Yanling, Beijing 101100 (CN); MA, Hedi, Beijing 101100 (CN)
(74) Representative: Ricker, Mathias
(86) International application number: PCT/CN2024/098862
(87) International publication number: WO 2025/025843

(57) **Abstract**

Disclosed is an electrolyte storage tank, which comprises a tank body comprising an inner chamber, the tank body being provided with a liquid inlet and a liquid outlet which are in communication with the inner chamber, the tank body being formed of acid-resistant concrete by means of pouring, and the inner chamber of the tank body being configured to store an electrolyte.

## Description

### RELATED APPLICATIONS

This application claims priority to Chinese Patent Application No. 202310969212.X, filed August 2, 2023, and titled ELECTROLYTE STORAGE TANK, which is incorporated herein by reference in its entirety.

### TECHNICAL FIELD

The present application relates to electrolyte storage tank technologies, and in particular to an electrolyte storage tank.

### BACKGROUND ART

Nowadays, as new clean energy sources are gradually replacing traditional energy sources, energy storage systems, as an indispensable part of new clean energy systems, are playing a pivotal role for the entire new power generation industry. Since new clean energy sources for power generation (for example, wind power, solar power, etc.) are greatly influenced by natural environmental factors, it is difficult to continuously output stable and safe electric energy, and therefore it is very important to use energy storage batteries as an intermediary in the new energy sources for power generation. In the field of energy storage batteries, vanadium flow batteries are widely used in the energy storage industry because they are highly stable and safe, and at the same time, their electricity-carrying capacity, service durability and long-term discharging capacity are far superior to those of other energy storage devices (e.g., lithium batteries, pumped water energy storage, and air compression energy storage).

Currently, tanks for storing electrolytes used in flow battery systems are generally made of plastics such as PP, PPH, and PE, and are formed by means of injection molding, blow molding, molding, winding, or processing and forming such as hot melt welding, ultrasonic welding, etc. Plastic storage tanks have the disadvantages of being environmentally unfriendly, not easily degradable, etc. In addition, plastic storage tanks suffer from high transportation costs, as they must be transported twice before arriving at the customer's site, first from a supplier to a flow battery manufacturer, and then from the flow battery manufacturer to the project site of the customer. Furthermore, plastic storage tanks often have fixed shape and volume, making it impossible to flexibly configure the volume according to local conditions and to the customer's project site situations. In the case of a large-scale project, the volume of plastic storage tanks poses a big limitation to the project. Moreover, plastic storage tanks are difficult to install, and a crane or a forklift is needed when installing a plastic storage tank into a container or a site. The entire installation process is time-consuming and laborious, and the body of the storage tank may be damaged due to improper operation during the installation process. In addition, although plastic storage tanks are provided with reinforcing ribs or other reinforcing means, they have a low strength and a relatively poor reliability compared with storage tanks of concrete structure or steel structure. Moreover, the volume of a plastic storage tank is generally determined by a mold. It is only possible to manufacture storage tanks of particular sizes, and larger or irregular storage tanks cannot be made according to project site situations, which represents limitations in flexibility and size.

In view of the above, the use of architecturally built storage tanks in flow battery systems would be more advantageous over plastic storage tanks in terms of construction costs, transportation, installation, and subsequent recycling.

### SUMMARY OF THE INVENTION

The present application provides an electrolyte storage tank, which allows for flexible configuration, reduction of difficulties in transportation and installation, and cost saving.

The electrolyte storage tank provided by the present application comprises a tank body comprising an inner chamber, the tank body being provided with a liquid inlet and a liquid outlet which are in communication with the inner chamber, the tank body being formed of acid-resistant concrete by means of pouring, and the inner chamber of the tank body being configured to store an electrolyte.

In an exemplary embodiment, the tank body is pre-embedded with a steel bar framework.

In an exemplary embodiment, the electrolyte storage tank further comprises a liquid inlet tube and a liquid outlet tube which are in communication with the liquid inlet and the liquid outlet, the liquid inlet tube and the liquid outlet tube being pre-embedded in the tank body.

In an exemplary embodiment, an inner wall surface of the tank body is provided with a protective layer, the protective layer comprising an insulating layer.

In one exemplary embodiment, the protective layer further comprises an anti-corrosion layer provided on an inner surface of the insulating layer.

In an exemplary embodiment, an outer wall surface of the tank body is provided with a heat reflecting layer.

In an exemplary embodiment, the electrolyte storage tank further comprises an exhaust system, the exhaust system comprising an exhaust tube which is in communication with the inner chamber.

In an exemplary embodiment, the tank body comprises a tank main body and a cover body which is disposed covering the tank main body, the exhaust tube being connected to the cover body.

In an exemplary embodiment, the electrolyte storage tank further comprises a protective gas protection system which is used to feed a protective gas into the inner chamber of the tank body;

the protective gas protection system comprising a protective gas feeding tube which is in communication with the inner chamber of the tank body, and a protective gas generation device which is connected to the protective gas feeding tube.

In an exemplary embodiment, the tank body comprises a tank main body and a cover body which is disposed covering the tank main body, the protective gas feeding tube being connected to the cover body.

In an exemplary embodiment, the electrolyte storage tank further comprises a liquid level measurement device.

In one exemplary embodiment, the liquid level measurement device comprises a liquid level measurement tube of which two ends are both in communication with the inner chamber of the tank body, the liquid level measurement tube being located on an outer side of the tank body and being disposed in a height direction of the tank body.

In an exemplary embodiment, the tank body is further provided with an electrolyte injection port which is in communication with the inner chamber.

In an exemplary embodiment, the tank body comprises a tank main body and a cover body which is disposed covering the tank main body, the electrolyte injection port being provided on the cover body.

In an exemplary embodiment, the electrolyte storage tank further comprises a guard rail which is disposed surrounding a top wall of the tank body and/or a climbing ladder which is disposed on a side wall of the tank body.

In an exemplary embodiment, the tank body is provided in a plural number, the multiple tank bodies comprising a first tank body which is used to store a cathode electrolyte and a second tank body which is used to store an anode electrolyte.

In an exemplary embodiment, the tank body is configured to protrude from the ground; or the tank body is configured to be recessed below the ground.

Compared with related art, embodiments of the present application are formed of acid-resistant concrete by means of pouring, and can be manufactured at a project site, thereby reducing the transportation cost and installation cost of an electrolyte storage tank of a flow battery system. At the same time, the electrolyte storage tank of the embodiments of the present application can be designed and constructed as a suitable electrolyte storage tank without volume restriction according to local conditions as well as actual situations of a project site, which is more adapted to large-scale energy storage power plants at megawatt levels or higher. In addition, the electrolyte storage tank of the embodiments of the present application is dismantlable and recoverable to allow for dismantling and recovery for recycling at any time in a final phase of a project life cycle, and is thus green and environmentally friendly.

Other features and advantages of the present application will be set forth in the following description, and in part will become apparent from the description, or may be understood by means of the implementation of the present application. Other advantages of the present application will be achieved and attained by means of the solutions described in the description and the accompanying drawings.

### BRIEF DESCRIPTION OF THE DRAWINGS

The accompanying drawings are used to provide an understanding of the technical solutions of the present application and constitute a part of the specification, and together with the embodiments of the present application, are used to explain the technical solution of the present application and not to limit the technical solution of the present application.
FIG. 1 shows a perspective view, from one angle, of an exemplary electrolyte storage tank of the present application;
FIG. 2 shows a front partial cross-sectional view of a tank body of the exemplary electrolyte storage tank of the present application;
FIG. 3 shows a partial cross-sectional view of a tank main body of the tank body of the exemplary electrolyte storage tank of the present application;
FIG. 4 shows a top view of the exemplary electrolyte storage tank of the present application;
FIG. 5 shows a perspective view, from another angle, of the exemplary electrolyte storage tank of the present application;
FIG. 6 shows a side view of the exemplary electrolyte storage tank of the present application; and
FIG. 7 shows a perspective view of another exemplary electrolyte storage tank of the present application.

### DETAILED DESCRIPTION OF PREFERRED EMBODIMENTS

Multiple embodiments of the present application are described, but the descriptions are illustrative rather than limiting. In addition, it will be apparent to those of ordinary skill in the art that more examples and implementations are possible within the scope encompassed by the embodiments described in the present application. Although many possible combinations of features are shown in the Drawings and are discussed in the Detailed Description of Preferred Embodiments, many other combinations of the disclosed features are possible. Unless expressly limited otherwise, any feature or element of any embodiment may be used in conjunction with or in place of any other feature or element of any other embodiment.

The present application includes and contemplates combinations of features and elements known to those of ordinary skill in the art. The embodiments, features and elements that have been disclosed in the present application may also be combined with any conventional feature or element to form a unique inventive solution as defined by the claims. Any feature or element of any embodiment may also be combined with features or elements from other inventive solutions to form another unique inventive solution as defined by the claims. It is therefore to be understood that any of the features shown and/or discussed in the present application may be implemented separately or in any suitable combination. Accordingly, the embodiments are not limited except as by the appended claims and the equivalents thereof. Furthermore, various modifications and alterations can be made within the scope of the appended claims.

Furthermore, in describing representative embodiments, the specification may have presented the method and/or process as a particular order of steps. However, to the extent that the method or process does not rely on the particular order of the steps described herein, the method or process should not be limited to the particular order of the steps described. As will be appreciated by one of ordinary skill in the art, other orders of steps are possible. Therefore, the particular order of the steps set forth in the description should not be construed as limitation on the claims. Furthermore, the claims directed to the method and/or process should not be limited to implementing the steps thereof in the order written, as those skilled in the art may readily appreciate that variations to the order may be possible and still remain within the spirit and scope of the embodiments of the present application.

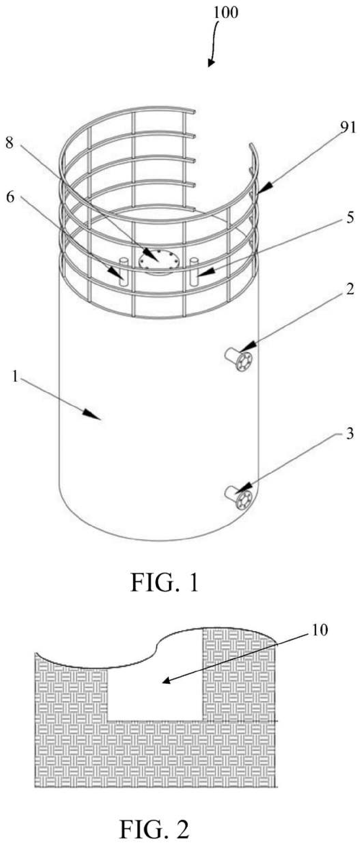

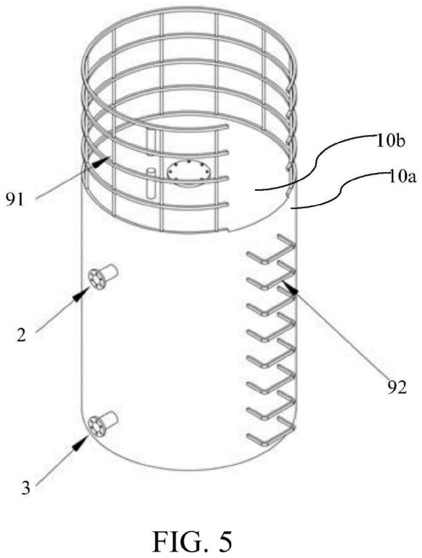

As shown in FIG. 1 through FIG. 6, an embodiment of the present disclosure provides an exemplary electrolyte storage tank 100, comprising a tank body 1. An inner chamber 10 which is used to store an electrolyte is formed in the tank body 1. The tank body 1 is further provided with a liquid inlet (not shown, since a liquid inlet tube 2 is mounted thereon) and a liquid outlet (not shown, since a liquid outlet tube 3 is mounted thereon) which are in communication with the inner chamber 10.

The electrolyte storage tank 100 further comprises the liquid inlet tube 2 and the liquid outlet tube 3 which are connected to the liquid inlet and the liquid outlet, respectively. The liquid inlet tube 2 and the liquid outlet tube 3 are pre-embedded in the tank body 1 so as to be connected to an external pipeline. The external pipeline is provided with a circulation pump (not shown) which is used to circulate the electrolyte in the inner chamber.

The tank body 1 is formed of acid-resistant concrete, such as acid-resistant water-glass concrete or acid-resistant sulfur concrete, by means of pouring. In general, corrosion of concrete is mostly corrosion by an acidic medium, and concrete having corrosion resistance in the presence of the acidic medium is called acid-resistant concrete. Acid-resistant concrete is widely used in acid-proof tanks, plating tanks, etc. in the chemical industry.

The electrolyte storage tank 100 of the embodiment of the present application is formed of acid-resistant concrete by means of pouring, and can be manufactured at a project site, thereby reducing the transportation cost and installation cost of an electrolyte storage tank of a flow battery system. At the same time, the electrolyte storage tank 100 of the embodiment of the present application can be designed and constructed as a suitable electrolyte storage tank 100 without volume restriction according to local conditions as well as actual situations of a project site, which is more adapted to large-scale energy storage power plants at megawatt levels or higher. In addition, the electrolyte storage tank 100 of the embodiment of the present application is dismantlable and recoverable to allow for dismantling and recovery for recycling at any time in a final phase of a project life cycle, and is thus green and environmentally friendly. Of course, the electrolyte storage tank 100 of the embodiment of the present application may also be prefabricated and assembled on site.

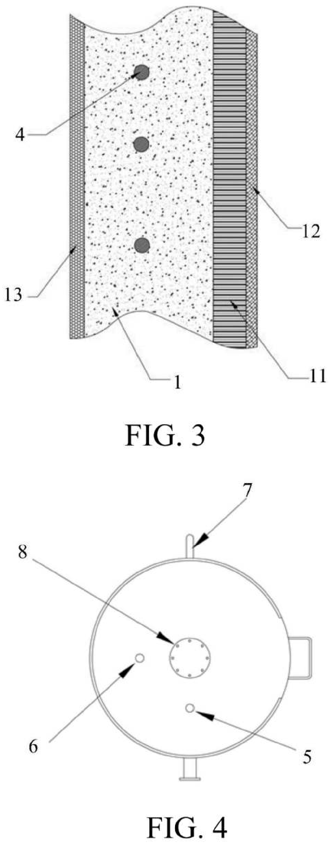

As shown in FIG. 4, the tank body 1 of the embodiment of the present application is cylindrical in shape, and comprises a tank main body 10a and a cover body 10b which is disposed on an upper portion of the tank main body 10a.

As shown in FIG. 2, the tank body 1 of the electrolyte storage tank 100 of the embodiment of the present application is pre-embedded with a steel bar framework 4. When performing pouring, the steel bar is used as a framework, and then acid-resistant concrete is poured. The acid-resistant concrete is used to fill the space supported by the steel bar framework 4, and the steel bar framework 4 can improve the strength and rigidity of the electrolyte storage tank 100.

As shown in FIG. 2, an inner wall surface of the tank body 1 of the electrolyte storage tank 100 of the embodiment of the present application is provided with a protective layer, the protective layer comprising an insulating layer 11. The protective layer further comprises an anti-corrosion layer 12 provided on an inner surface of the insulating layer 11.

Since concrete has a certain water content, it is not a completely insulating material, but a poor conductor. Therefore, the insulation layer 11 is sprayed on an inner surface of the acid-resistant concrete so as to isolate the electrolyte and prevent the electrolyte from directly discharging to the ground, thereby ensuring the insulation performance of the entire tank body 1. In addition, the anti-corrosion layer 12 is further sprayed on the insulating layer so as to isolate the electrolyte from the insulating coating 11, thereby ensuring the acid resistance of the entirety.

In general, polyurethane is used and sprayed to form the insulating layer 11, which not only has an insulating effect, but also has a heat-preserving effect, thereby preventing a temperature effect of ambient temperature on the electrolyte. An acid-resistant coating is used for the anti-corrosion layer 12.

As shown in FIG. 2, an outer wall surface of the tank body 1 of the electrolyte storage tank 100 of the embodiment of the present application is provided with a heat reflecting layer 13. The heat reflecting coating 13 mainly has the effect of heat reflection, serving to reflect sunlight to prevent the electrolyte from warming up.

As shown in FIGS. 1 and 4, the electrolyte storage tank 100 of the embodiment of the present disclosure further comprises an exhaust system, which is in communication with the inner chamber 10 of the tank body 1, and is used to remove harmful gases such as hydrogen and oxygen from the electrolyte. The exhaust system comprises an exhaust tube 5 which is in communication with the inner chamber 10, the exhaust tube 5 being connected to the cover body 10b of the tank body 1.

As shown in FIGS. 1 and 4, the electrolyte storage tank 100 of the embodiment of the present application further comprises a protective gas protection system. The protective gas protection system comprises a protective gas feeding tube 6 which is in communication with the inner chamber of the tank body, and a protective gas generation device (not shown) which is connected to the protective gas feeding tube 6. The protective gas protection system provides a protective gas such as nitrogen so as to protect the electrolyte from oxidation. The protective gas feeding tube 6 is connected to the cover body 10b of the tank body 1.

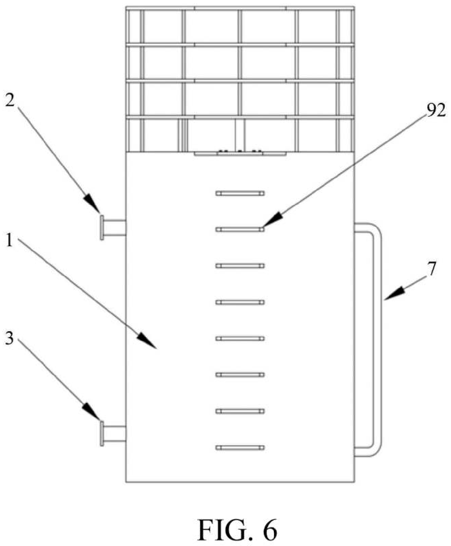

As shown in FIGS. 4 and 6, the electrolyte storage tank 100 of the embodiment of the present application further comprises a liquid level measurement device, the liquid level measurement device comprising a liquid level measurement tube 7 of which two ends are both in communication with the inner chamber 10 of the tank body 1. The liquid level measurement tube 7 is located on an outer side of the tank body 1 and is disposed in a height direction of the tank body 1, and is used to observe the liquid level height of the electrolyte inside the tank body 1.

As shown in FIGS. 1 and 4, the electrolyte storage tank 100 of the embodiment of the present application further comprises an electrolyte injection port 8 which is disposed on the tank body 1 and is used to inject the electrolyte, the injection port 8 being provided on the cover body 10b.

As shown in FIG. 1 and FIGS. 5-6, the electrolyte storage tank 100 of the embodiment of the present application further comprises a guard rail 91 which is disposed surrounding the cover body 10b of the tank body 1, and/or a climbing ladder 92 which is disposed on the tank main body 10a of the tank body 1. The climbing ladder 92 is used by operation and maintenance staff to climb onto the storage tank, and the guard rail 91 is used to protect the safety of the operation and maintenance staff during inspection and repair.

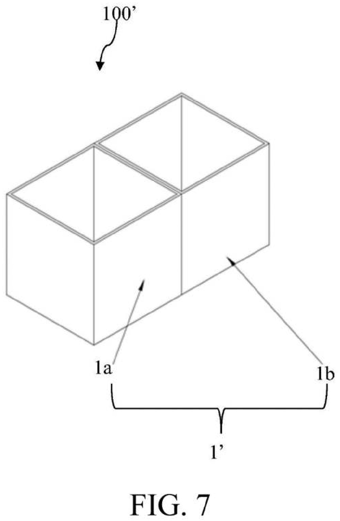

As shown in FIG. 7, another exemplary embodiment of the present application concerns an electrolyte storage tank 100', which mainly differs from the electrolyte storage tank 100 in terms of shape. Other features thereof can be apparent with reference to the electrolyte storage tank 100' the electrolyte storage tank 100, and will not be repeated herein.

In this embodiment, the tank body l' of the electrolyte storage tank 100' is rectangular in shape, and is provided in a plural number. The plurality of tank bodies l' comprise a first tank body 1a which is used to store a cathode electrolyte and a second tank body 1b which is used to store an anode electrolyte. Disposing the cathode tank body 1a and the anode tank body 1b together facilitates simplifying and balancing the pipeline.

The electrolyte storage tanks 100 and 100' of the embodiments of the present application are configured to protrude from the ground, or recessed below the ground. When the electrolyte storage tank is configured to be recessed below the ground in the form of a liquid storage pool or liquid storage reservoir, such design can better save ground space.

**In** other embodiments, the electrolyte storage tank may have any other shape, and may be made into any other shape according to site situations.

**In** the description of the present invention, it should be noted that the orientational or positional relationships indicated by the terms "upper", "lower", "a side", "another side", "an end", "another end", "an edge", "relative", "four corners", "periphery", and "an ' 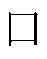 '-shaped structure", etc. are relationships based on the orientations or positions shown in the figures. The terms are only intended to facilitate and simplify the description of the present invention and are not intended to specify or imply that the indicated structure has a particular orientation or is constructed and operated in a particular orientation, and therefore should not be construed as limiting the present invention.

**In** the description of the embodiments of the present invention, unless otherwise explicitly specified and defined, the terms "connected", "directly connected", "fixedly connected", "installed", and "assembled" should be understood in a broad sense. For example, the connection may be fixed connection, or may be detachable connection, or integral connection. The terms "installed", "connected", and "fixedly connected" may denote direct connection, or directly connection by means of an intermediary, or communication between respective interiors of two elements. For those of ordinary skill in the art, the specific meanings of the above terms in the present invention may be understood depending on specific situations.

As will be understood by one of ordinary skill in the art, all or some of the steps in the method disclosed hereinabove, or all or some of the functional modules/units in the system or device disclosed hereinabove, may be implemented as software, firmware, hardware, and suitable combinations thereof. **In** hardware embodiments, the partition of the functional modules/units mentioned in the above description does not necessarily corresponds to the partition of a physical assembly. For example, one physical assembly may have a plurality of functions, or one function or step may be implemented by a number of physical assemblies in cooperation with each other. Some or all of the assemblies may be implemented as software for execution by a processor, such as a digital signal processor or microprocessor, or may be implemented as hardware, or as an integrated circuit, such as an application specific integrated circuit. Such software may be distributed on a computer-readable medium, which may include a computer storage medium (or a non-transitory medium) and a communication medium (or a transitory medium). As is well known to those of ordinary skill in the art, the term computer storage medium includes volatile and nonvolatile, and removable and non-removable media implemented in any methods or technologies for the storage of information (such as computer readable instructions, data structures, program modules or other data). Computer storage media include, but are not limited to, RAMs, ROMs, EEPROMs, flash memories or other memory technologies, CD-ROMs, digital versatile disks (DVD) or other optical disk storages, magnetic cassettes, magnetic tapes, magnetic disk storages or other magnetic storage devices, or any other media which can be used to store the desired information and can accessed by a computer. Additionally, it is well known to those of ordinary skill in the art that communication media typically comprise computer-readable instructions, data structures, program modules, or other data in modulated data signals such as carrier waves or other transport mechanisms, and may include any information delivery media.

## Claims

1. An electrolyte storage tank, **characterized by** comprising a tank body comprising an inner chamber, the tank body being provided with a liquid inlet and a liquid outlet which are in communication with the inner chamber, the tank body being formed of acid-resistant concrete by means of pouring, and the inner chamber of the tank body being configured to store an electrolyte.

2. The electrolyte storage tank according to claim 1, wherein the tank body is pre-embedded with a steel bar framework.

3. The electrolyte storage tank according to claim 1, further comprising a liquid inlet tube and a liquid outlet tube which are in communication with the liquid inlet and the liquid outlet, the liquid inlet tube and the liquid outlet tube being pre-embedded in the tank body.

4. The electrolyte storage tank according to claim 1, wherein an inner wall surface of the tank body is provided with a protective layer, the protective layer comprising an insulating layer.

5. The electrolyte storage tank according to claim 4, wherein the protective layer further comprises an anti-corrosion layer provided on an inner surface of the insulating layer.

6. The electrolyte storage tank according to claim 1, wherein an outer wall surface of the tank body is provided with a heat reflecting layer.

7. The electrolyte storage tank according to claim 1, further comprising an exhaust system, the exhaust system comprising an exhaust tube which is in communication with the inner chamber.

8. The electrolyte storage tank according to claim 7, wherein the tank body comprises a tank main body and a cover body which is disposed covering the tank main body, the exhaust tube being connected to the cover body.

9. The electrolyte storage tank according to claim 1, further comprising a protective gas protection system which is used to feed a protective gas into the inner chamber of the tank body;
the protective gas protection system comprising a protective gas feeding tube which is in communication with the inner chamber of the tank body, and a protective gas generation device which is connected to the protective gas feeding tube.

10. The electrolyte storage tank according to claim 9, wherein the tank body comprises a tank main body and a cover body which is disposed covering the tank main body, the protective gas feeding tube being connected to the cover body.

11. The electrolyte storage tank according to claim 1, further comprising a liquid level measurement device.

12. The electrolyte storage tank according to claim 11, wherein the liquid level measurement device comprises a liquid level measurement tube of which two ends are both in communication with the inner chamber of the tank body, the liquid level measurement tube being located on an outer side of the tank body and being disposed in a height direction of the tank body.

13. The electrolyte storage tank according to claim 1, wherein the tank body is further provided with an electrolyte injection port which is in communication with the inner chamber.

14. The electrolyte storage tank according to claim 13, wherein the tank body comprises a tank main body and a cover body which is disposed covering the tank main body, the electrolyte injection port being provided on the cover body.

15. The electrolyte storage tank according to claim 1, further comprising a guard rail which is disposed surrounding a top wall of the tank body and/or a climbing ladder which is disposed on a side wall of the tank body.

16. The electrolyte storage tank according to claim 1, wherein the tank body is provided in a plural number, the plurality of tank bodies comprising a first tank body which is used to store a cathode electrolyte and a second tank body which is used to store an anode electrolyte.

17. The electrolyte storage tank according to claim 1, wherein the tank body is configured to protrude from the ground; or the tank body is configured to be recessed below the ground.
